# EUROPEAN PATENT SPECIFICATION

(11) **EP 2 059 545 B1**
(45) Date of publication and mention of the grant of the patent: **10.07.2013**
(21) Application number: 07806792.3
(22) Date of filing: 30.08.2007
(51) Int. Cl.: C08F 292/00, C08K 9/04, C08L 51/10, C09D 151/10, C08F 290/06

(54) **NANO-OXIDE PARTICLES AND PRODUCTION PROCESS THEREOF**
NANO-OXID TEILCHEN UND DEREN HERSTELLUNG
PARTICULES DE NANO-OXYDES ET LEUR PROCÉDÉ DE PRODUCTION

(30) Priority: 30.08.2006 JP 2006233781
(43) Date of publication of application: 20.05.2009
(73) Proprietor: Canon Kabushiki Kaisha, Tokyo 146-8501 (JP)
(72) Inventor: ZHANG Zuyi c/o CANON KABUSHIKI KAISHA, Tokyo 146-8501 (JP)
(74) Representative: Weser, Wolfgang
(86) International application number: PCT/JP2007/067350
(87) International publication number: WO 2008/026774

(56) References cited:
- EP-A- 0 495 732
- GB-A- 1 156 653
- JP-A- 1 306 477
- JP-A- 56 147 837
- US-A- 4 617 327
- US-A- 4 994 429
- US-A1- 2003 100 630

## Description

### [TECHNICAL FIELD]

The present invention relates to nano-oxide particles for imparting characteristics such as a desired refractive index and transparency to a composite material comprising an oxide and an organic polymer and a process for producing the nano-oxide particles. The present invention also relates to a transparent optical resin material and an optical material which employ the nano-oxide particles.

### [BACKGROUND ART]

Amorphous thermoplastic resins such as styrene-based resin, acrylic resin and polycarbonate resin and curable resins such as unsaturated polyester resin and diallyl phthalate resin are general-purpose transparent resin materials having good transparency to light of wavelengths in the visible region. Compared with inorganic glass materials, these resin materials have low specific gravity and an excellent characteristic well-balanced in terms of mechanical characteristics such as moldability, mass-productivity, toughness, flexibility, and shock resistance. However, refractive indices of these resin materials are determined by their constituents, so that the resin materials have a narrow variable region of optical characteristics compared with conventional optical glass materials.

In order to increase a refractive index of a transparent resin material, attempt to incorporate fine particles of metal oxide, metal sulfide, or the like having a high refractive index into the resin matrix has been made.

Japanese Laid-Open Patent Application (JP-A) Hei 1-306477 has disclosed a coating agent, for an optical material, comprising an oxide sol such as an antimony oxide sol and siloxane as a matrix component. In this case, a silane coupling agent or siloxane contributes to dispersion of the colloid. However, a bonding property between siloxane and fine oxide particles is deteriorated by the existence of water so that it is difficult to sufficiently suppress agglomeration among the fine oxide particles. Such a composite material is therefore limited to application of a thin film, and thas not yet been used as a bulk material.

As an attempt to improve dispersibility of the oxide particles in the matrix, studies on a dispersant acting on surfaces of the oxide particles and on introduction of a component acting on the fine oxide particles into the matrix have been made.

JP-A Hei 5-25320 has disclosed a curable composition comprising a thermosetting resin such as acrylic resin or unsaturated polyester resin, an inorganic filler of fine powder, such as titanium oxide or the like, and a dispersant consisting of a phosphate compound having a terminal aryl group. JP-A 2002-55225 has disclosed an active energy-polymerizable resin layer, as a hard coating surface layer of an optical filter, containing inorganic particles treated with an organic compound having an active energy-curable group and an acidic group such as phosphoric group, sulfonic group or carboxylic group. JP-A (Tokuhyo) 2004-524396 has disclosed a composite composition, as an electric or optic device, comprising inorganic particles and a polymer having a side-chain containing oxysilane group, phosphonate group, sulfide group, amino group, or sulfonate group. JP-A 2002-105325 has disclosed a composition prepared by dispersing semiconductor ultrafine particles in a resin matrix having a polymer chain copolymerized with radical-polymerizable phosphine oxide as a ligand for the fine particles.

In the fields of utilizing nanometer oxides for the purpose of increasing a refractive index of an optical material, uniform dispersion of fine particles at nanometer level has become increasingly important. In addition to the optical material, a dispersing technique of nano-oxide particles is also required for an inorganic-organic composite material strengthened with the nano-oxide particles, a shielding material for radiation, ultraviolet rays, visible rays, or infrared rays on the basis of absorbency of the nano-oxide particles, a nonlinear material based on plasmon in the nano-oxide particles, etc.

However, in the techniques disclosed in the above described documents, interaction between a surface of inorganic fine particle and a functional group such as phosphoric group, phosphine oxide or carboxyl group is ensured but a resultant bonding strength is not sufficient. Accordingly, with a decrease in size of the inorganic fine particles, agglomeration among colloid particles cannot be sufficiently suppressed, so that it is difficult to sufficiently uniformly disperse the fine particles of nanometer level. In the case of requiring thermal moldability, it is required that dispersibility of nano-oxide particles is not destroyed by flow of a thermoplastic matrix, so that a surface treating technique of the oxide fine particles becomes further difficult.

US 2003/0100630 A1 discloses a curable composition comprising (A) particles prepared by bonding at least one oxide of an element selected from the group consisting of silicon, aluminum, zirconium, titanium, zinc, germanium, indium, tin, antimony, and cerium, and an organic compound which comprises a polymerizable group, (B) a compound having a melamine group and one or more polymerizable groups and (C) a compound having at least two polymerizable groups in the molecule other than the component (B).

And US 4617327 discloses a filler for a polymerizable composition comprising an inorganic core of particles with a particle size of 10 to 500 nm, a first shell of vinylsilane and a second shell of a (meth)acrylate polymer.

### [DISCLOSURE OF THE INVENTION]

In view of the above described problems, a principal object of the present invention is to provide nano-oxide particles capable of being uniformly dispersed in a general-purpose resin matrix to sufficiently reduce a degree of agglomeration among particles.

Another object of the present invention is to provide a transparent optical resin material containing the nano-oxide particles for the purpose of realizing a high refractive index or the like and a lens using the transparent optical resin material.

According to an aspect of the present invention, there is provided the nano-oxide particle claimed in claim 1.

According to another aspect of the present invention, there is provided the production process of surface-protected nano-oxide particles as claimed in claim 6, the transparent optical resin material claimed in claim 14, and the lens claimed in claim 15. The other claims relate to further developments.

The nano-oxide particles of the present invention are coated with a polyvinyl monomolecular film as claimed, so that the nano-oxide particles exhibit high dispersibility and can be dispersed at a high concentration in an optical resin material, a polymerizable monomer for an optical material, or a curable oligomer for the optical material. As a result, it is possible to realize an optical material or an optical lens which has a high refractive index and excellent transparency. It is also possible to realize a high-strength composite material containing nano-oxide particles dispersed therein.

These and other objects, features and advantages of the present invention will become more apparent upon a consideration of the following description of the preferred embodiments of the present invention taken in conjunction with the accompanying drawings.

### [BRIEF DESCRIPTION OF THE DRAWINGS]

Figure 1 is a schematic view for illustrating a nano-oxide particle according to the present invention.
Figure 2 is a schematic view for illustrating a lens molded from a transparent optical resin material in which nano-oxide particles of the present invention are dispersed.

### [BEST MODE FOR CARRYING OUT THE INVENTION]

Preferred embodiments of the present invention will be described in detail.

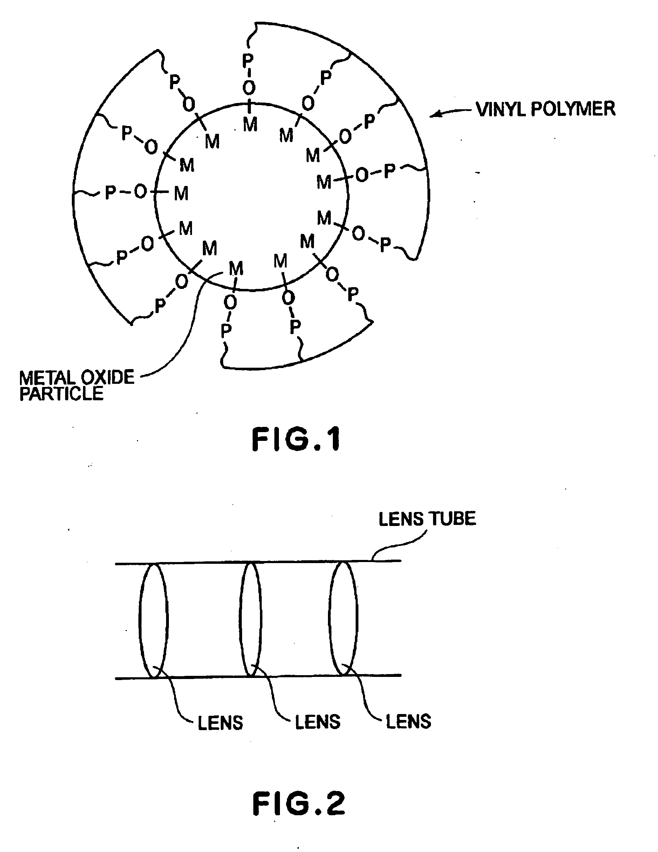

The nano-oxide particles of the present invention are characterized in that agglomeration among the nano-oxide particles is suppressed by coating a surface of each nano-oxide particle with a polyvinyl monomolecular film having a binding functional group. The binding functional group derived from a vinyl monomer having a binding functional group bonds to the surface of nano-oxide particle. The vinyl monomer is polymerized to provide a vinyl polymer (polyvinyl compound). Hydrocarbon linkages (bonds) are exposed at an outermost surface of nano-oxide particle to form a monomolecular film. Figure 1 schematically illustrates a nano-oxide particle of the present invention. Referring to Figure 1, M represents a metal atom located at the nano-oxide particle surface. In the case where the binding functional group is phosphoric group, as shown in Figure 1, phosphorus atom forms P-O-M linkage (bond) with associated metal oxide located at the nano-oxide particle surface. At the same time, a vinyl group of each molecule is polymerized.

Generally, the "monomolecular film" means a film, such as LB (Langmuir-Blodgett) film, in which a monomer (one molecule) is placed in such a state that hydrophobic groups and hydrophilic groups are uniformly arranged. However, in the present invention, a monomer before its vinyl group is polymerized is regarded as one molecule and a film in which a chain after the polymerization binds to the oxide particle through the binding functional group is referred to as a "polyvinyl monomolecular film". More specifically, at the surface of the oxide particle, the vinyl monomer is polymerized and present as a polymer while the binding functional group derived from the vinyl monomer binds to the oxide surface.

In the present invention, the nano-oxide particles means oxide particles having a particle size of 100 nm or less.

The binding functional group of the polyvinyl monomolecular film acts on metal ion and hydroxyl group at the oxide particle surface and attracts the polyvinyl monomolecular film to the oxide particle surface. The action may be attributable to covalent bond, ionic bond, hydrogen bond, and chelate bond. Herein, the binding functional group means a functional group capable of binding to the oxide particle surface. The binding functional group is not particularly limited and can be used in the present invention so long as a functional group binds to metal ion of the oxide. Examples of the binding functional group may include primary amino group, secondary amino group, tertiary amino group, hydroxyl group, epoxy group, organic group having β-diketone structure, organic group having β-ketoester, carboxyl group, sulfonic group, phosphoric group, and thiol group.

The polyvinyl monomolecular film having the binding functional group used in the present invention is prepared by polymerizing a vinyl monomer having the binding functional group, a vinyl monomer mixture containing the vinyl monomer, or a polymerizable oligomer of the vinyl monomer.

Specific examples of the vinyl monomer having the binding functional group will be described.

Examples of the amino group-containing vinyl monomer may include H₂C=CHCH₂NH₂, H₂C=CHCH₂NHCH₃, H₂C=C(CH₃)COOC₂H₄NH₂, H₂C=C(CH₃)COOC₂H₄NHCH₃, H₂C=C(CH₃)COOC₂H₄N(CH₃)₂, H₂C=C(CH₃)COOC₂H₄N(C₂H₅)₂, H₂C=(CH₃)COOC₃H₆NH₂, H₂C=C(CH₃)COOC₃H₆NHCH₃, H₂C=CHCOCC₂H₄NH₂, H₂C=CHCOOC₂H₄NHCH₃, and H₂C=CHCOCC₂H₄N(CH₃)₂.

Examples of the hydroxyl group-containing vinyl monomer may include H₂C=CHCH₂OH, H₂C=C(CH₃)COOC₂H₄OH, H₂C=C(CH₃)COOC₃H₆OH, H₂C=C(CH₃)COOCH₂CHOHCH₃, H₂C=C(CH₃)COOCH₂CHOHCH₂CH₃, H₂C=CHCOOC₂H₄OH, H₂C=CHCOOC₃H₆OH, H₂C=CHCOOCH₂CHOHCH₃, and H₂C=CHCOOCH₂CHOHCH₂CH₃.

Examples of (meth)acrylic monomer having the epoxy group may include a vinyl monomer represented by the following formula (3): 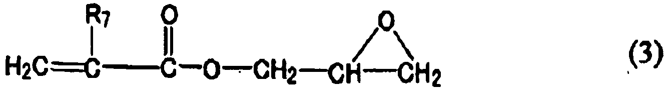 wherein R₇ represents hydrogen atom or methyl group.

Examples of the sulfonic group-containing vinyl monomer may include CH₂=CHSO₃H, CH₂=CHCH₂SO₃H, H₂C=C(CH₃)COOC₃H₄OSO₃H, H₂C=C(CH₃)COOC₃H₆SO₃H, H₂C=C(CH₃)COOC₂H₄OCOC₅H₁₀OSO3H, H₂C=CHCOOC₂H₄OCOC₅H₁₀OSO₃H, and H₂C=CHCOOC₁₂H₂₄(1,4-pH)SO₃H.

Examples of the carboxyl group-containing vinyl monomer may include those represented by the following formulas (4) and (5): 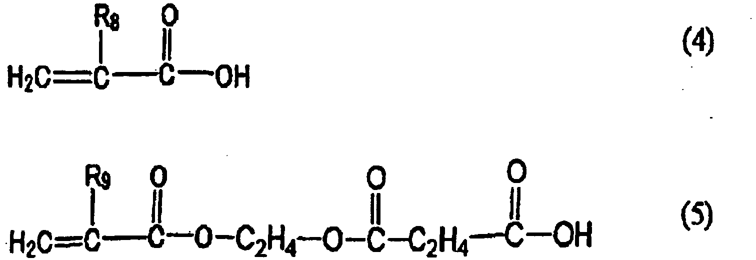 wherein R₈ and R₉ represent hydrogen atom or methyl group.

Examples of the phosphoric group-containing vinyl monomer may include (meth)acrylate monomer having phosphoric group represented by the following formulas (6) and (7): 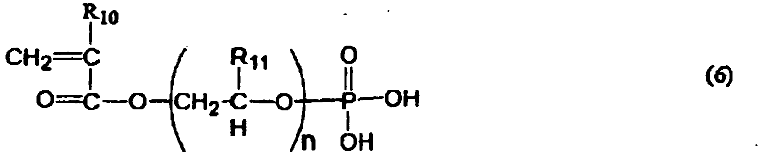 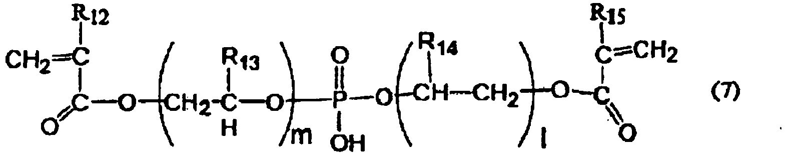 wherein R₁₀, R₁₂ and R₁₅ independently represent hydrogen atom or methyl group; R₁₁, R₁₃ and R₁₅ independently represent hydrogen atom or alkyl group; and n, m and l are an integer of l or more.

Commercially available phosphoric group-containing vinyl monomer may include those represented by the following formula (8):

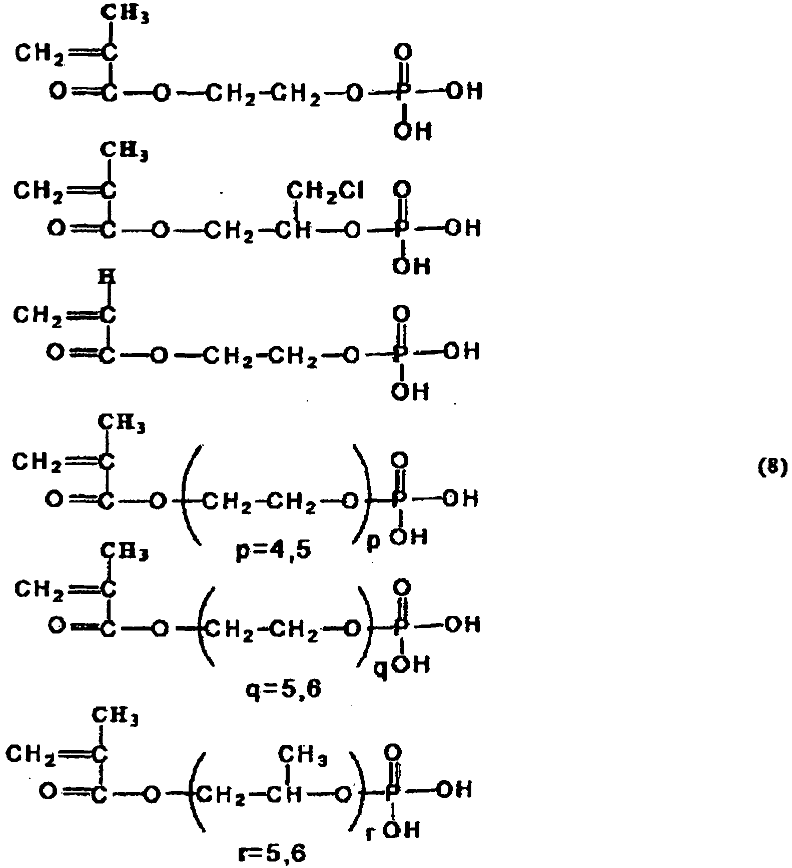

Examples of the thiol group-containing vinyl monomer may include CH₂=CHCH₂SH and CH₂=CHCH₂CH₂SH.

It is also possible to add another vinyl monomer in an amount of 80 wt. % or less on the basis of starting material as a copolymerization component to the binding functional group-containing vinyl monomer so long as a binding force between the polyvinyl monomolecular film and the oxide particle is not impaired.

Examples of such a vinyl monomer may include acrylates, methacrylates, acrylonitrile, methacrylonitrile, styrene, nuclear-substituted styrenes, alkyl vinyl ethers, alkyl vinyl esters, perfluoroalkyl vinyl ethers, perfluoroalkyl vinyl esters, maleic acid, maleic anhydride, fumaric acid, itaconic acid, maleimide, and phenylmaleimide.

As another method of obtaining the polymer having the binding functional group, it is also possible to impart the above described binding functional group to a polyvinyl compound having a reactive functional group. For example, when the reactive functional group is epoxy group or hydroxyl group, the polyvinyl compound is reacted with P₂O₅ or H₃PO₄ to change the reactive functional group of the polyvinyl compound into the phosphoric group.

The polyvinyl monomolecular film may preferably contain the acrylic monomer component in an amount of 20 wt. % or more, particularly 50 wt. % or more on the monomer basis. This is because when the amount of the acrylic monomer component is increased, an affinity for a general purpose transparent resin material is increased, thus leading to good transparency of nano-oxide particle-dispersed composite material.

The above described binding functional group may preferably be thiol group, carboxyl group, sulfonic group, or phosphoric group, particularly phosphoric group. In this case, the binding functional group forms strong ionic bond with metal ion at the oxide particle, so that a binding force of the polyvinyl monomolecular film onto the oxide particle surface is increased. In the case of the phosphoric group, it forms P-O-M bond (M: metal ion of the oxide) with the metal ion located at the oxide particle surface remains attached on the oxide particle surface in many environments including moisture environment. In addition, it causes less light absorption in the visible region. Further, from the viewpoints of economy and an affinity for the matrix, it is more preferable that the phosphoric group-containing acrylates represented by the above described formula (8) are used.

The nano-oxide particles may preferably have a particle size in a range of 0.5 - 30 nm, more preferably 1 - 10 nm. When the particle size is 0.5 nm or larger, a characteristic attributable to the oxide can be obtained. When the particle size is 30 nm or smaller, light scattering by the particles is less, so that it is possible to obtain a high-transparency composite material when the nano-oxide particles are combined with a transparent resin matrix. Herein, the particle size means a crystallite size of primary particles and can be determined by direct observation through a transmission electron microscope (TEM) or the like.

In the present invention, any nano-oxide particles except for nano-oxide particles of alkali metal can be used. Examples of oxides for the nano-oxide particles of the present invention may include magnesium oxide, aluminum oxide, iron oxide, titanium oxide, gallium oxide, niobium oxide, tin oxide, indium oxide, zirconium oxide, lanthanum oxide, cadmium oxide, hafnium oxide, erbium oxide, neodymium oxide, cerium oxide, dysprosium oxide, and a mixed oxide of these oxides. From the viewpoint of stability, it is preferable that aluminum oxide, iron oxide, titanium oxide, galium oxide, niobium oxide, tin oxide, indium oxide, zirconium oxide, lanthanum oxide, cadmium oxide, hafnium oxide, erbium oxide, neodymium oxide, cerium oxide, dysprosium oxide, and a mixed oxide of these oxides are used. Such oxide particles of nano-size ordinarily have many hydroxyl groups at their surfaces and are stabilized in many cases by electric double layer created by acid or base or by a surface treatment agent. Further, the oxide particles used in the present invention may also include a partially hydroxylated particles such as oxide particles containing hydroxyl group in their crystal lattices.

The nano-oxide particles of the present invention can be present in a dispersed state in an organic dispersion medium. The dispersion medium can be selected, depending on the application therefor, from alcohols such as methanol, ethanol, propanol, iso-propanol, butanol, sec-butanol, and tert-butanol; ketons such as acetone and methyl ethyl ketone; and aromatic solvents such as toluene and xylene. Further, it is also possible to use a mixture solvent of water with these organic solvents, as desired. It is further possible to use the nano-oxide particles in other dispersion states in which they are dispersed in a monomer solution, an oligomer solution, or a mixture solution of the monomer solution and the oligomer solution.

A specific production process of the nano-oxide particles which have been surface-protected or coated according to the present invention will be described.

The nano-oxide particles of the present invention can be obtained by binding the polymer having the binding functional group and a polyvinyl main chain to the surfaces of the oxide particles to form a polyvinyl monomolecular film at each oxide particle surface. The polyvinyl monomolecular film can also be formed by in-situ vinyl polymerization of the vinyl monomer in a dispersion state at the oxide particle surfaces. In this case, formation of the bond between the binding functional group and the oxide particle surface and the polymerization of the vinyl monomer proceed at the same time to form the polyvinyl monomolecular film at the oxide particle surface.

More specifically, in a dispersion solution containing the oxide particles and the vinyl monomer having the binding functional group, the polymerization is performed in a state in which an amount of the dispersion medium in the entire dispersion solution is 70 wt. % or more. When the amount of the dispersion medium in the entire dispersion solution is 70 wt. % or more, by the interaction of the binding functional group-containing vinyl monomer with the oxide particle surface, the probability of polymerization at the oxide particle surface is larger than the probability of polymerization between vinyl monomer components in the dispersion medium to permit dominant formation of the polyvinyl monomolecular film at the oxide particle surface. Further, the polymerization between the vinyl monomer components having the binding functional group proceeds at a moderate speed and with a degree of the polymerization, a degree of contribution to stabilization of entropy at the oxide particle surface inreases, so that a tendency of binding to the oxide particle is more enhanced. Accordingly, the polymerization product in the dispersion medium can also contribute to formation of the monomolecular film at the oxide particle surface. As a polymerization condition, the amount of the dispersion medium in the dispersion solution may more preferably be 80 wt. % or more.

Further, the polyvinyl monomolecular film may also be formed at the oxide particle surface by using a dispersion solution containing another vinyl monomer or a polymerizable oligomer as desired. Further, if necessary, it is also possible to employ a process of adsorbing and attaching the binding functional group-containing vinyl monomer to the oxide particle surface in advance of the polymerization. This process may, e.g., be an oxidative decomposition process of a colloidal surface stabilizing component other than the binding functional group-containing vinyl monomer or a dissociation process using a method such as dialysis or substitution of the solvent with a solvent different in affinity.

The dispersion medium used in the present invention is not particularly limited so long as it can disperse the nano-oxide particles having the dispersibility in the above described polymerizable monomer but may preferably be a hydrophilic organic dispersion medium such as alcohols or ketones or a mixture solvent of the hydrophilic organic dispersion medium with water from the viewpoint of stability of the nano-oxide particles. Examples of alcohols may include methanol, ethanol, propanol, butanol, etc. In the case where the oxide particle surface is coated with the binding functional group-containing monomer, as the dispersion medium, it is also possible to use a hydrophobic dispersion medium such as toluene or xylene. In the case of using an aqueous dispersion solution of the nano-oxide particles, an aqueous dispersion medium may preferably be partly replaced with the hydrophilic organic dispersion medium in order to ensure the stability of the dispersion solution. The replacement with the hydrophilic dispersion medium may be performed before or during the vinyl polymerization.

The vinyl polymerization is performed by using a polymerization initiator. Examples of the polymerization initiator may include azo-type initiators such as 2,2-azobisisobutyronitrile, 2,2-azobis(2,4-dimethylvaleronitrile), dimethyl 2,2-azobis(2-methylpropionate), and dimethyl 2,2-azobisisobutylate; and peroxide-type initiators such as lauryl peroxide, benzoyl peroxide, and tert-butyl peroctoate. In the aqueous dispersion medium, it is possible to use an aqueous initiator such as potassium persulfate.

Further, it is also possible to initiate radical copolymerization only by light irradiation. As a photodegradable radical initiator, it is possible to use, e.g., aminoacetophenones such as α-aminoacetophenone and 2-benzyl-2-dimethylamino-1-(4-morphorinophenyl)-butane -1; benzyldimethylketals; and glyoxylates.

As the oxide particles used in the present invention, from the veiwpoints of uniformity in particle size and stability of the dispersion solution, oxide particles synthesized through hydrothermal method may preferably be used. More specifically, a hydroxide is formed by a known method such as ion exchanging method, deflocculating method or hydrolysis method, and then is heated to form a stable oxide colloid sol, which is used as the oxide particles.

Examples of the ion exchanging method may include a method in which acidic salt of metal is treated with hydrogen-type cation exchange resin and a method in which basic salt of metal is treated with hydrogen-type anion exchange resin.

Examples of the deflocculating method may include a method in which a gel obtained by neutralizing the acidic salt of metal with base or the basic salt of metal with acid is washed and then is deflocculated with an acid or a base.

Examples of the hydrolysis method may include a method in which alkoxide of metal is hydrolyzed and a method in which unnecessary acid is removed after the basic salt of metal is hydrolyzed under heating.

The oxide particles may preferably be surface-modified with acid, base, an organic compound, a surfactant, or the like during or after the hydrothermal synthesis. The oxide particles may also be surface-modified with the binding functional group-containing monomer or oligomer.

The nano-oxide particles of the present invention are finally covered with the polyvinyl monomolecular film having the binding functional group, so that dispersion stability thereof does not basically vary depending on the above described pre-treatment for the oxide particles. When the oxide particle is once protected by the polyvinyl monomolecular film having the binding functional group, it is easy to achieve solvent replacement by another desired organic dispersion medium.

An amount of the monomer required for forming a stable organic surface layer changes depending on the particle size of the oxide particles, so that a weight ratio of (vinyl monomer)/(oxide particles) may appropriately be adjusted depending on the kind of the monomer and the particle size. It is ordinarily preferable that the weight ratio of (vinyl monomer)/(oxide particles) is set in a range of 1/10 to 10/1.

The nano-oxide particles of the present invention can be introduced into a desired organic optical matrix. The organic optical matrix is not particularly limited so long as it is transparent but may be a thermoplastic resin material or a thermosetting resin material. Examples of the thermoplastic resin material may suitably include styrene-based resin, acrylic resin, aromatic polycarbonate resin, and amorphous polyolefin resin. Examples of the thermosetting resin material may include polyurethane, polythiourethane, and polysiloxane.

As a method of introducing the nano-oxide particles into the resin material, formation of a composite material between the nano-oxide particles and the resin material is performed through an appropriate liquid state depending on a characteristic of the resin material. For example, with respect to a resin material soluble in the organic solvent, the resin material is dissolved in the organic solvent in advance and mixed with a dispersion solution of the nano-oxide particles to prepare a uniform dispersion solution. Thereafter, the organic solvent is removed from the dispersion solution to obtain a resin material in which the nano-oxide particles are dispersed. Further, it is also possible to employ a method in which a resin material is dissolved in the dispersion solution of the nano-oxide particles containing a solvent in which the resin material is soluble and thereafter the solvent is removed. Further, it is also possible to obtain a resin material, in which the nano-oxide particles are dispersed, by introducing the nano-oxide particles into a monomer for forming the resin material and then polymerizing the monomer. As necessary, it is also possible to carry out the polymerization by using the resin material-forming monomer, an oligomer having a polymerizable functional group, or two or more species of polymerizable oligomers as starting materials for the resin material. In the case of forming a composite material of the nano-oxide particles with the thermoplastic resin material, the nano-oxide particles have high dispersibility and interaction of the nano-oxide particles with the resin matrix is minimized, so that it is possible to apply a conventional molding method utilizing thermoplasticity. In this case, the resultant composite material shows high transparency since the surface organic layer is not detached from the oxide particle keeping the dispersibility of the particles at a high level. As the thermoplastic resin material, acrylic resin and aromatic polycarbonate resin are particularly preferred.

The above described transparent optical resin material in which the nano-oxide particles are dispersed is applicable to an optical material such as a lens. Figure 2 shows a lens prepared by molding the transparent optical resin material in which the nano-oxide particles of the present invention are dispersed. By dispersing the nano-oxide particles of the present invention, it is possible to obtain a lens having transparency and high refractive index.

Hereinbelow, the present invention will be described more specifically based on Examples. In the following Examples, "%" represents "wt. % (% by weight)".

### (Example 1)

A mixture solution was prepared by mixing 40 g of aqueous TiO₂ dispersed sol (solid content: 6 %, average particle size: 5 nm) and 60 g of 1 %-aqueous solution of phosphate represented by the following formula (10):

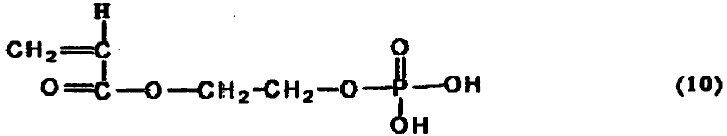

The mixture solution was placed in a flask and solvent substitution with propanol was performed under heating. At a time when a total amount of the dispersion solution was 110 g and a concentration of propanol in the solvent reached about 50 % (about 97 % of the dispersion medium), 0.01 g of potassium persulfate (K₂S₂O₈) was added as a polymerization initiator. After the resultant mixture was polymerized for 10 hours at 50 °C, the polymerization mixture was cooled and added in a hollow membrane, which was externally washed sufficiently with a 50 %-aqueous propanol solution to remove unnecessary components. While heating the hollow membrane, the solvent was substituted with methyl ethyl ketone (MEK). Finally, concentration was performed to obtain about 50 g of nano-titanium oxide fine particles (solid content: about 6.5 %) which were surface-protected with a monomolecular film.

Into 10 g of a 2 %-polymethyl methacrylate (PMMA) solution in MEK, 10 g of the above obtained sol of nano-titanium oxide fine particles was added and stirred for 2 hours. Thereafter, the mixture was placed in a glass mold which had been subjected to water-repellent treatment and dried for 48 hours at 80 °C to obtain a transparent composite film containing the nano-titanium oxide fine particles. When refractive index of the thus obtained composite film was measured by Abbe refractometer, the refractive index was 1.77.

### (Example 2)

A mixture solution was prepared by mixing 20 g of aqueous SnO₂ dispersed sol (solid content: 10 %, average particle size: 2 nm), 25 g of 4 %-aqueous solution of phosphate represented by formula (11) shown below, and 25 g of 1 %-methacrylic acid solution:

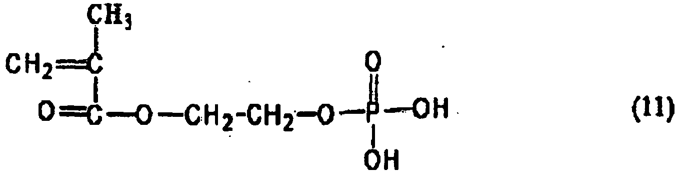

The mixture solution was placed in a flask and solvent substitution with propanol was performed under heating. At a time when a total amount of the dispersion solution was 95 g and a concentration of propanol in the solvent reached about 50 % (about 96 % of the dispersion medium), 0.01 g of potassium persulfate (K₂S₂O₈) was added as a polymerization initiator. After the resultant mixture was polymerized for 10 hours at 50 °C, the polymerization mixture was cooled and added in a hollow membrane, which was externally washed sufficiently with a 50 %-aqueous propanol solution to remove unnecessary components. While heating the hollow membrane, the solvent was substituted with MEK. Finally, concentration was performed to obtain about 60 g of nano-tin oxide fine particles (solid content: about 4.5 %) which were surface-protected with a monomolecular film.

Into 30 g of a 2 %-PMMA solution in MEK, 20 g of the above obtained sol of nano-tin oxide fine particles was added and stirred for 2 hours. Thereafter, the mixture was placed in a glass mold which had been subjected to water-repellent treatment and dried for 48 hours at 80 °C to obtain a composite film containing the nano-tin oxide fine particles. The thus obtained composite film was transparent. When a refractive index of the composite film was measured by Abbe refractometer, the refractive index was 1.57.

### (Example 3)

A mixture solution was prepared by mixing 20 g of aqueous ZrO₂ dispersed sol (solid content: 10 %, average particle size: 5 nm) and 50 g of 1 %-aqueous solution of phosphate represented by the following formula (12):

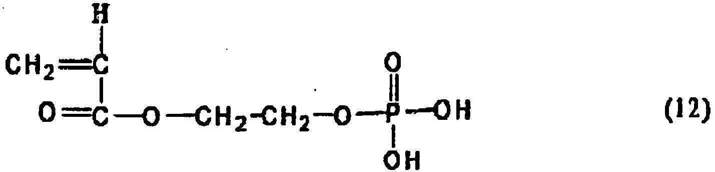

The mixture solution was placed in a flask and solvent substitution with propanol was performed under heating. At a time when a total amount of the dispersion solution was 80 g and a concentration of propanol in the solvent reached about 50 % (about 96 % of the dispersion medium), 0.3 g of methyl methacrylate (monomer) was added and stirred for 5 hours. Thereafter, to the mixture, 0.01 g of potassium persulfate (K₂S₂O₈) was added as a polymerization initiator. After the resultant mixture was polymerized for 10 hours at 50 °C, the polymerization mixture was cooled and added in a hollow membrane, which was externally washed sufficiently with a 50 %-aqueous propanol solution to remove unnecessary components. While heating the hollow membrane, the solvent was substituted with MEK. Finally, concentration was performed to obtain about 50 g of nano-zirconium oxide fine particles (solid content: about 5.5 %) which were surface-protected with a monomolecular film.

Into 10 g of a 2 %-PMMA solution in MEK, 10 g of the above obtained sol of nano-zirconium oxide fine particles was added and stirred for 2 hours. Thereafter, the mixture was placed in a glass mold which had been subjected to water-repellent treatment and dried for 48 hours at 80 °C to obtain a transparent composite film containing the nano-zirconium oxide fine particles. When a refractive index of the thus obtained composite film was measured by Abbe refractometer, the refractive index was 1.65.

### (Example 4)

A mixture solution was prepared by mixing 20 g of aqueous AlOOH dispersed sol (solid content: 20 %, average particle size: 5 nm) and 10 g of 1 %-aqueous solution of phosphate represented by the following formula (13):

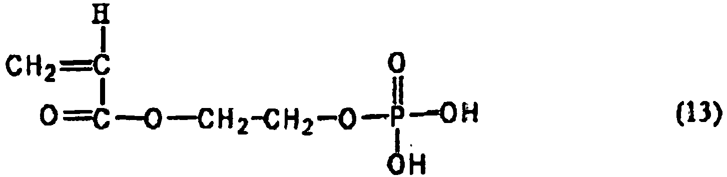

The mixture solution was placed in a flask and solvent substitution with propanol was performed under heating. At a time when a total amount of the dispersion solution was about 125 g and a concentration of propanol in the solvent reached about 50 % (about 96 % of the dispersion medium), 0.5 g of methyl methacrylate (monomer) was added and stirred for 5 hours. Thereafter, to the mixture, 0.01 g of potassium persulfate (K₂S₂O₈) was added as a polymerization initiator. After the resultant mixture was polymerized for 10 hours at 50 °C, the polymerization mixture was cooled and added in a hollow membrane, which was externally washed sufficiently with a 50 %-aqueous propanol solution to remove unnecessary components. While heating the hollow membrane, the solvent was substituted with MEK. Finally, concentration was performed to obtain about 100 g of nano-aluminum oxide fine particles (solid content: about 5.5 %) which were surface-protected with a monomolecular film.

Into 10 g of a 2 %-PMMA solution in MEK, 10 g of the above obtained sol of nano-aluminum oxide fine particles was added and stirred for 2 hours. Thereafter, the mixture was placed in a glass mold which had been subjected to water-repellent treatment and dried for 48 hours at 80 °C to obtain a transparent composite film containing the nano-zirconium oxide fine particles. When a refractive index of the thus obtained composite film was measured by Abbe refractometer, the refractive index was 1.52. Further, when the composite film was observed through a transmission electron microscope (TEM), it was confirmed that the particles were uniformly dispersed.

### (Comparative Example)

Solvent substitution with propanol was performed while heating 20 g of aqueous TiO₂ dispersed sol (solid content: 6 %, average particle size: 5 nm). The solvent substitution was continued until a concentration of propanol in the solvent reached about 50 %.

Into 10 g of 2 %-PMMA solution in MEK, when 10 g of the above obtained sol of nano-titanium oxide fine particles was added, the dispersion solution became white and turbid. After the dispersion solution was stirred for 2 hours, the dispersion solution was placed in a glass mold which had been subjected to water-repellent treatment and dried for 48 hours at 80 °C. As a result, an opaque composite film was obtained.

### [INDUSTRIAL APPLICABILITY]

The nano-oxide particles of the present invention coated with the polyvinyl monomolecular film having the binding functional group, exhibit high dispersibility and can be dispersed at a high concentration in an optical resin material, a polymerizable monomer for an optical material, or a curable oligomer for the optical material. As a result, it is possible to realize an optical material or an optical lens which have a high refractive index and excellent transparency. It is also possible to realize a high-strength composite material containing nano-oxide particles dispersed therein.

While the invention has been described with reference to the structures disclosed herein, it is not confined to the details set forth and this application is intended to cover such modifications or changes as may come within the purpose of the improvements or the scope of the following claims.

## Claims

1. A nano-oxide particle coated with a polyvinyl monomolecular film based on a vinyl monomer with a binding functional group bound to a metal ion at the surface of said nano-oxide particle,
where the binding functional group is a thiol group, carboxyl group, sulfonic group, or phosphoric group.

2. The particle according to Claim 1, wherein the vinyl monomer with a binding functional group is an acrylic monomer with said binding functional group.

3. The particle according to Claim 1 or 2, wherein the polyvinyl monomolecular film is formed by polymerizing an acrylic monomer having a binding functional group represented by the following formula (1): 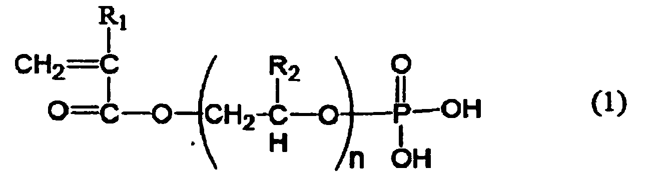 wherein R₁ is a hydrogen atom or methyl group; R₂ is an alkyl group, halogen atom, or hydrogen atom; and n is an integer of 1 or more.

4. The particle according to any one of Claims 1 to 3, wherein the nano-oxide particles have a particle size of 1 nm or more and 30 nm or less.

5. The particle according to any one of Claims 1 to 4, wherein the nano-oxide is an oxide selected from the group consisting of aluminum oxide, titanium oxide, niobium oxide, tin oxide, indium oxide, zirconium oxide, lanthanum oxide, cadmium oxide, hafnium oxide, erbium oxide, neodymium oxide, cerium oxide, dysprosium oxide, and a mixed oxide of these oxides.

6. A production process of surface-protected nano-oxide particles, comprising:
preparing a mixture solution comprising nano-oxide particles, a vinyl monomer with a binding functional group capable of binding to a metal ion at the surface of said nano-oxide particles, and a dispersion medium,
where the binding functional group is a thiol group, carboxyl group, sulfonic group, or phosphoric group, and the dispersion medium is contained in an amount of 70 wt. % or more in the mixture solution;
polymerizing the vinyl monomer in the mixture solution; and then
removing a liquid component in the mixture solution to obtain solid nano-oxide particles.

7. The process according to Claim 6, wherein the vinyl monomer with a binding functional group is an acrylic monomer with said binding functional group.

8. The process according to Claim 6 or 7, where the binding functional group is a phosphoric group.

9. The process according to any one of Claims 6 to 8, wherein the vinyl monomer with a binding functional group is an acrylic monomer with a binding functional group represented by the following formula (2): 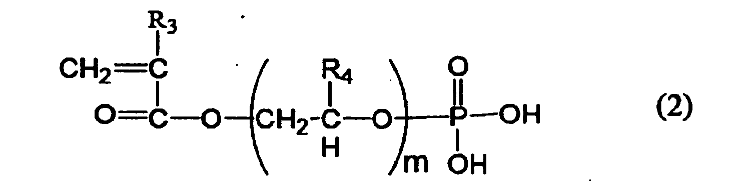 wherein R₃ is a hydrogen atom or methyl group; R₄ is an alkyl group, halogen atom, or hydrogen atom; and m is an integer of 1 or more.

10. The process according to any one of Claims 6 to 9, wherein the nano-oxide particles are obtained by hydrothermal synthesis.

11. The process according to any one of Claims 6 to 10, wherein the nano-oxide particles have a particle size of 1 nm or more and 30 nm or less.

12. The process according to any one of Claims 6 to 11, wherein the nano-oxide is an oxide selected from the group consisting of aluminum oxide, titanium oxide, niobium oxide, tin oxide, indium oxide, zirconium oxide, lanthanum oxide, cadmium oxide, hafnium oxide, erbium oxide, neodymium oxide, cerium oxide, dysprosium oxide, and a mixed oxide of these oxides.

13. The process according to any one of Claims 6 to 12, wherein the dispersion medium is a mixture solvent of water with alcohol or ketone.

14. A transparent optical resin material comprising:
a resin material; and
nano-oxide particles according to any one of Claims 1 to 5 dispersed in the resin material:

15. A lens comprising:
the transparent optical resin material according to Claim 14, which has been molded.

## Patentansprüche

1. Nanooxidpartikel, das mit einer monomolekularen Polyvinylschicht überzogen ist, die auf einem Vinylmonomer mit einer bindenden funktionellen Gruppe basiert, die an ein Metallion an der Oberfläche des Nanooxidpartikels gebunden ist,
wobei die bindende funktionelle Gruppe eine Thiolgruppe, eine Carboxylgruppe, eine Sulfonsäuregruppe oder eine Phosphorsäuregruppe ist.

2. Partikel nach Anspruch 1, wobei das Vinylmonomer mit einer bindenden funktionellen Gruppe ein Acrylmonomer mit der bindenden funktionellen Gruppe ist.

3. Partikel nach Anspruch 1 oder 2, wobei die monomolekulare Polyvinylschicht durch Polymerisieren eines Acrylmonomers mit einer bindenden funktionellen Gruppe erzeugt worden ist, das mit der folgenden Formel (1) angegeben wird: 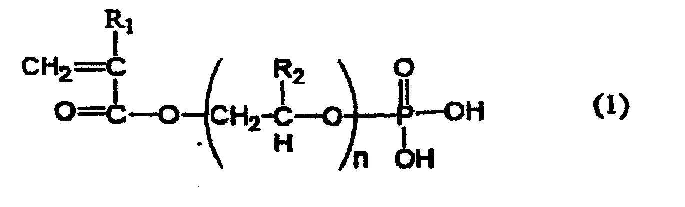 worin R₁ ein Wasserstoffatom oder eine Methylgruppe ist;
R₂ eine Alkylgruppe, ein Halogenatom oder ein Wasserstoffatom ist; und
n eine ganze Zahl größer oder gleich 1 ist.

4. Partikel nach einem der Ansprüche 1 bis 3, wobei Nanooxidpartikel eine Partikelgröße von 1 nm oder mehr und 30 nm oder weniger aufweisen.

5. Partikel nach einem der Ansprüche 1 bis 4, wobei das Nanooxid ein Oxid ist, das aus der Gruppe von Aluminiumoxid, Titanoxid, Nioboxid, Zinnoxid, Indiumoxid, Zirconiumoxid, Lanthanoxid, Cadmiumoxid, Hafniumoxid, Erbiumoxid, Neodymoxid, Ceroxid, Dysprosiumoxid und einem Mischoxid dieser Oxide ausgewählt ist.

6. Verfahren zum Herstellen von Nanooxidpartikeln mit geschützter Oberfläche, das folgendes umfasst:
Herstellen eines Lösungsgemischs, das Nanooxidpartikel, ein Vinylmonomer mit einer bindenden funktionellen Gruppe, die sich an ein Metallion an der Oberfläche der Nanooxidpartikel binden kann, und ein Dispersionsmittel umfasst,
wobei die bindende funktionelle Gruppe eine Thiolgruppe, eine Carboxylgruppe, eine Sulfonsäuregruppe oder eine Phosphorsäuregruppe ist, und das Dispersionsmittel in einer Menge von 70 Gew.-% oder mehr im Lösungsgemisch enthalten ist;
Polymerisieren des Vinylmonomers in dem Lösungsgemisch; und anschließend
Entfernen flüssiger Bestandteile im Lösungsgemisch, um feste Nanooxidpartikel zu erhalten.

7. Verfahren nach Anspruch 6, wobei das Vinylmonomer mit einer bindenden funktionellen Gruppe ein Acrylmonomer mit der bindenden funktionellen Gruppe ist.

8. Verfahren nach Anspruch 6 oder 7, wobei die bindende funktionelle Gruppe eine Phosphorsäuregruppe ist.

9. Verfahren nach einem der Ansprüche 6 bis 8, wobei das Vinylmonomer mit einer bindenden funktionellen Gruppe ein Acrylmonomer mit einer bindenden funktionellen Gruppe ist, das mit der folgenden Formel (2) angegeben wird: 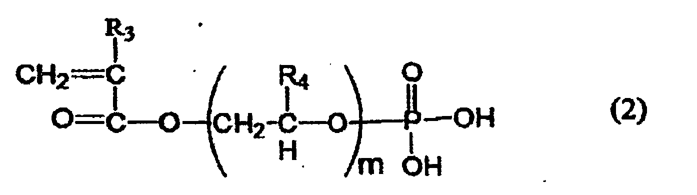 worin R₃ ein Wasserstoffatom oder eine Methylgruppe ist;
R₄ eine Alkylgruppe, ein Halogenatom oder ein Wasserstoffatom ist; und
m eine ganze Zahl größer oder gleich 1 ist.

10. Verfahren nach einem der Ansprüche 6 bis 9, wobei die Nanooxidpartikel durch hydrothermale Synthese erhalten werden.

11. Verfahren nach einem der Ansprüche 6 bis 10, wobei die Nanooxidpartikel eine Partikelgröße von 1 nm oder mehr und 30 nm oder weniger aufweisen.

12. Verfahren nach einem der Ansprüche 6 bis 11, wobei das Nanooxid ein Oxid ist, das aus der Gruppe von Aluminiumoxid, Titanoxid, Nioboxid, Zinnoxid, Indiumoxid, Zirconiumoxid, Lanthanoxid, Cadmiumoxid, Hafniumoxid, Erbiumoxid, Neodymoxid, Ceroxid, Dysprosiumoxid und einem Mischoxid dieser Oxide ausgewählt ist.

13. Verfahren nach einem der Ansprüche 6 bis 12, wobei das Dispersionsmittel ein Lösungsmittelgemisch von Wasser mit Alkohol oder Keton ist.

14. Transparentes optisches Harzmaterial, das folgendes umfasst:
ein Harzmaterial; und
Nanooxidpartikel nach einem der Ansprüche 1 bis 5, die in dem Harzmaterial dispergiert sind.

15. Linse, die folgendes umfasst:
ein transparentes optisches Harzmaterial nach Anspruch 14, das geformt worden ist.

## Revendications

1. Particule de nano-oxyde revêtue d'un film monomoléculaire de polyvinyle à base d'un monomère vinylique avec un groupe fonctionnel de liaison lié à un ion métallique à la surface de ladite particule de nano-oxyde,
dans laquelle le groupe fonctionnel de liaison est un groupe thiol, un groupe carbonyle, un groupe sulfonique ou un groupe phosphorique.

2. Particule suivant la revendication 1, dans laquelle le monomère vinylique avec un groupe fonctionnel de liaison est un monomère acrylique avec ledit groupe fonctionnel de liaison.

3. Particule suivant la revendication 1 ou 2, dans laquelle le film monomoléculaire de polyvinyle est formé par polymérisation d'un monomère acrylique ayant un groupe fonctionnel de liaison représenté par la formule (1) suivante : 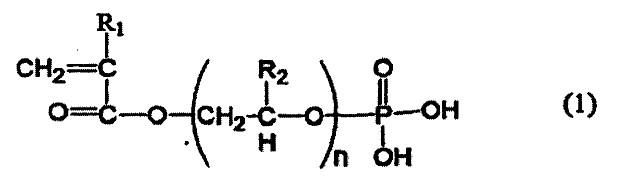 dans laquelle R₁ représente un atome d'hydrogène ou un groupe méthyle ; R₂ représente un groupe alkyle, un atome d'halogène ou un atome d'hydrogène ; et n représente un nombre entier égal ou supérieur à 1.

4. Particule suivant l'une quelconque des revendications 1 à 3, dans laquelle les particules de nano-oxyde ont un diamètre de particule compris entre 1 nm ou plus et 30 nm ou moins.

5. Particule suivant l'une quelconque des revendications 1 à 4, dans laquelle le nano-oxyde est un oxyde choisi dans le groupe consistant en l'oxyde d'aluminium, l'oxyde de titane, l'oxyde de niobium, l'oxyde d'étain, l'oxyde d'indium, l'oxyde de zirconium, l'oxyde de lanthane, l'oxyde de cadmium, l'oxyde d'hafnium, l'oxyde d'erbium, l'oxyde de néodyme, l'oxyde de cérium, l'oxyde de dysprosium et un oxyde mixte de ces oxydes.

6. Procédé de production de particules de nano-oxyde protégées en surface, comprenant :
la préparation d'une solution d'un mélange comprenant des particules de nano-oxyde, un monomère vinylique avec un groupe fonctionnel de liaison capable de se lier à un ion métallique à la surface desdites particules de nano-oxyde, et un milieu de dispersion,
le groupe fonctionnel de liaison étant un groupe thiol, un groupe carboxyle, un groupe sulfonique ou un groupe phosphorique, et le milieu de dispersion étant présent en une quantité égale ou supérieure à 70 % en poids dans la solution de mélange ;
la polymérisation du monomère vinylique dans la solution du mélange ; et ensuite
l'élimination d'un constituant liquide dans la solution du mélange pour obtenir des particules de nano-oxyde solides.

7. Procédé suivant la revendication 6, dans lequel le monomère vinylique avec un groupe fonctionnel de liaison est un monomère acrylique avec ledit groupe fonctionnel de liaison.

8. Procédé suivant la revendication 6 ou 7, dans lequel le groupe fonctionnel de liaison est un groupe phosphorique.

9. Procédé suivant l'une quelconque des revendications 6 à 8, dans lequel le monomère vinylique avec un groupe fonctionnel de liaison est un monomère acrylique avec un groupe fonctionnel de liaison représenté par la formule (2) suivants : 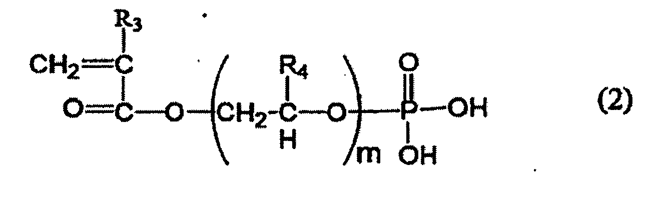 dans laquelle R₃ représente un atome d'hydrogène ou un groupe méthyle ; R₄ représente un groupe alkyle, un atome d'halogène ou un atome d'hydrogène ; et m représente un nombre entier égal ou supérieur à 1.

10. Procédé suivant l'une quelconque des revendications 6 à 9, dans lequel les particules de nano-oxyde sont obtenues par synthèse hydrothermique.

11. Procédé suivant l'une quelconque des revendications 6 à 10, dans lequel les particules de nano-oxyde ont un diamètre de particule compris entre 1 nm ou plus et 30 nm ou moins.

12. Procédé suivant l'une quelconque des revendications 6 à 11, dans lequel le nano-oxyde est un oxyde choisi dans le groupe consistant en l'oxyde d'aluminium, l'oxyde de titane, l'oxyde de niobium, l'oxyde d'étain, l'oxyde d'indium, l'oxyde de zirconium, l'oxyde de lanthane, l'oxyde de cadmium, l'oxyde d'hafnium, l'oxyde d'erbium, l'oxyde de néodyme, l'oxyde de cérium, l'oxyde de dysprosium et un oxyde mixte de ces oxydes.

13. Procédé suivant l'une quelconque des revendications 6 à 12, dans lequel le milieu de dispersion est un solvant constitué d'un mélange d'eau avec un alcool ou une cétone.

14. Matière du type résine optique transparente, comprenant :
une matière du type résine ; et
des particules de nano-oxyde suivant l'une quelconque des revendication 1 à 5 dispersées dans la matière du type résine.

15. Lentille comprenant :
la matière du type résine optique transparente suivant la revendication 14, qui a été moulée.
